# EUROPÄISCHE PATENTANMELDUNG

(11) **EP 1 138 644 A2**
(43) Veröffentlichungstag der Anmeldung: **04.10.2001**
(21) Anmeldenummer: 01107577.7
(22) Anmeldetag: 27.03.2001
(51) Int. Cl.: C04B 26/06

(54) **Masse und daraus geformte Körper mit Oberflächeneffekt**

(30) Priorität: 27.03.2000 DE 10015198; 11.10.2000 DE 10050507
(71) Anmelder: Dörge, Friedhelm, 17217 Mollenstorf (DE)
(72) Erfinder: Dörge, Friedhelm, 17217 Mollenstorf (DE)
(74) Vertreter: Voss, Karl-Heinz

(57) **Zusammenfassung**

Die Erfindung betrifft eine Masse aus Füllstoffen, Zuschlagstoffen und Bindemitteln zur Herstellung von frei formbaren Körpern oder zum Vergießen vor Ort. Die Füllstoffe sind anorganische Mineralmischungen. Bei einem Einsatz von Kunstharz als Bindemittel wird die Masse auch als Kunststein oder Mineralguss bezeichnet.
Aufgabe der Erfindung ist es, eine Masse für und daraus zu formende Körper, wie Wegleitelemente u.a. zu schaffen, die eine große länger anhaltende Eigenstrahlung(Lumineszenz) auch aus tieferen Schichten besitzt und die verschleißfest sind.

Es wurde gefunden, dass durch das Hinzufügen von lichtdurchlässigen Füllstoffen in einem bestimmten Anteil, bei gleichzeitiger Vermeidung von Feinstanteilen der sonstigen Füllstoffe, ein Eintritt und Austritt von Licht in bzw. aus dem Masseinneren ermöglicht wird. Dazu ist ein Mindestanteil von ca. 15 % der lichtdurchlässigen Füllstoffe erforderlich, damit ein direkter Kontakt dieser Teilchen miteinander und mit den Pigmenten mit ausreichender Wahrscheinlichkeit vorhanden ist. Feinstanteile mit einer Korngröße von 0 bis ca. 2 mm werden erfindungsgemäß nicht in die Masse eingebracht. Diese können je nach Anforderung durch Bindemittel und/oder Feinstanteile lichtdurchlässiger Füllstoffe ersetzt werden. Voraussetzung ist weiterhin, dass das Bindemittel lichtdurchlässig ist. Das trifft aber auf viele geeignete Kunstharze zu. In der Mischung umschließen die Kunstharze wie Polymethylmetacrylat (PMMA) alle Bestandteile.

## Beschreibung

Die Erfindung betrifft eine Masse aus Füllstoffen, Zuschlagstoffen und Bindemitteln zur Herstellung von frei formbaren Körpern oder zum Vergießen vor Ort. Die Füllstoffe sind anorganische Mineralmischungen. Bei einem Einsatz von Kunstharz als Bindemittel wird die Masse auch als Kunststein oder Mineralguss bezeichnet. Die Füllstoffe können aber auch organisch sein, wie Holzspäne oder Granulat aus Altkunststoff. Je nach Füllstoff und dem dafür geeigneten Bindemittel werden daraus verschiedenartige Platten (Terrazzoplatten, Spanplatten) bzw. Körper/Gegenstände hergestellt, oder die Masse wird vor Ort vergossen (Fußbodenbeschichtungen). Das Anwendungsgebiet ist überwiegend das Bauwesen, z. B. für Decken, Wände, Fußböden, Arbeitsplatten, Treppenstufen, Fensterbänke. Ein weiteres Anwendungsfeld ist die Herstellung verschiedenartigster Gegenstände wie Möbel, Sanitärelemente, Kamine Wegleitelementen u.a.. Wegleitelemente können auf Fahrbahnoberflächen gegossen, an Wänden in Räumen usw. angebracht werden und dienen als Verkehrsleiteinrichtungen, Fluchtwegkennzeichnungen und für sonstige Informationen.

Mit der erfinderischen Masse können besondere Lichteffekte erzielt werden.

### [Stand der Technik]

Zur Gestaltung von besonderen Oberflächen ist es bekannt, gezielt bestimmte Füllstoffe und/oder zusätzliche Zuschlagstoffe einzusetzen. Der sogenannte Kunststein(Kunstharzbeton) besteht aus verschiedenen Mineralien mit abgestimmter Korn-größe und dem Bindemittel Kunstharz. Damit kann z. B. Marmor oder Granit imitiert werden. Die Vorteile dieser Masse sind die vielen möglichen Oberflächenstrukturen und die freie Formung zum gewünschten Körper. Zur Herstellung eines marmorähnlichen Kunststeines wurde in dem DE GM 29705844 vorgeschlagen, verschiedenfarbiges, z. T. glasiertes, nicht transparentes Silikatmaterial zu verwenden. Aus dem DE GM 295113832 ist es bekannt, aus Steinsalz und Kunstharz ein Baumaterial herzustellen. Zum Einfärben von Baustoffen sind aus der DE OS 4033826 Pigmente aus Verbindungen des Bors, Aluminiums, Siliziums, Titans, Zinks, Zinns in Form von Granulaten bekannt. Auch die Verwendung von Glaskugeln oder Glasgranulat ist bekannt, z. B. aus der DE OS 3809937, DE OS 4212442 und DE GM 8800599. Diese werden aber nur als Füllstoff verwendet.

Schließlich sind auch fluoreszierende bzw. nachleuchtende Pigmente bekannt. Diese besitzen die besondere Eigenschaft, nach einer Bestrahlung mit Licht nachzuleuchten oder bei einem bestimmten Wellenlängenbereich aufzuleuchten. Durch die Beschichtung auf Folien, Schilder, Instrumente usw. wird die Sichtbarkeit verbessert. Die nachträgliche Oberflächenbeschichtung mit diesen Pigmenten erfordert aber einen zusätzlichen, speziellen Verfahrensschritt. Nachteilig ist auch, dass bei einer Beschädigung der Oberflächenschicht diese Eigenschaft verloren geht. Eine Untermischung in eine Masse ist uneffektiv, wenn diese nicht durchscheinend ist, da die Lichtstrahlen von den übrigen Bestandteilen absorbiert werden.

Fahrbahnen werden zur Verkehrsleitung im Allgemeinen mit Spezialfarben markiert. Die Lebensdauer ist durch den verkehrsbedingten Abrieb nicht sehr hoch. Auch die Informationswirkung, insbesondere bei Dunkelheit, ist unbefriedigend. Das betrifft auch Gegenstände wie Markierungsnägel, Pfosten usw. Es sind deshalb Leiteinrichtungen mit Reflektoren oder Beleuchtungen ausgerüstet worden, was relativ aufwendig ist.

Zur Verbesserung des Reflexionsvermögens ist es auch üblich, der Farbe lichtreflektierende Zusätze beizumischen oder Glasperlen auf die Oberfläche aufzubringen (DE GM 9115206). Zusätze von phosphoreszierenden Pigmenten erhöhen ebenfalls die Leuchtkraft. Die genannten Zusätze wirken allerdings nur bei der Anleuchtung durch eine Lichtquelle. Durch die DE OS 19827400 ist ein Rückstrahler mit Nachleuchtpigmenten bekannt. Diese sind seit längerem im Handel erhältlich und besitzen die besondere Eigenschaft, nach einer Bestrahlung mit Licht längere Zeit nachzuleuchten, also zu lumineszieren. Leiteinrichtungen in Gebäuden sind überwiegend an Wänden und Türen angeordnet. Aus Sicherheitsgründen sind wichtige Leitelemente mit einer Notbeleuchtung kombiniert, z. B. Fluchtwege. Die Praxis zeigt aber, dass bei Havarien und Bränden häufig die Notstromanlage ausfällt oder die Stromleitungen unterbrochen werden.

### [Aufgabe der Erfindung]

Aufgabe der Erfindung ist es deshalb, eine Masse für und daraus zu formende Körper, wie Wegleitelemente u.a. zu schaffen, die eine große länger anhaltende Eigenstrahlung(Lumineszenz) auch aus tieferen Schichten besitzt und die verschleißfest sind.

Erfindungsgemäß wird die Aufgabe entsprechend den Merkmalen gemäß Anspruch 1 gelöst.

Weitere spezielle Ausgestaltungen der Masse sind in den Unteransprüchen dargelegt.

Die Erfindung geht von der Erkenntnis aus, dass bei einem Untermischen von fluoreszierenden Pigmenten in die Masse, die übrigen Massebestandteile sowohl das einfallende Licht, als auch das Eigenleuchten absorbieren. Damit können nur die Pigmente unmittelbar an der Oberfläche wirksam werden. Es wurde nun gefunden, dass durch das Hinzufügen von lichtdurchlässigen Füllstoffen in einem bestimmten Anteil, bei gleichzeitiger Vermeidung von Feinstanteilen der sonstigen Füllstoffe, ein Eintritt und Austritt von Licht in bzw. aus dem Masseinneren ermöglicht wird. Dazu ist ein Mindestanteil von ca. 15 % der lichtdurchlässigen Füllstoffe erforderlich, damit ein direkter Kontakt dieser Teilchen miteinander und mit den Pigmenten mit ausreichender Wahrscheinlichkeit vorhanden ist. Die Feinstanteile mit einer Korngröße von 0 bis ca. 2 mm, die sich sonst in die Kornzwischenräume einlagern und die Teilchen umhüllen, werden erfindungsgemäß nicht in die Masse eingebracht. Diese können je nach Anforderung durch Bindemittel und/oder Feinstanteile lichtdurchlässiger Füllstoffe ersetzt werden. Voraussetzung ist weiterhin, dass das Bindemittel lichtdurchlässig ist. Das trifft aber auf viele geeignete Kunstharze zu. In der Mischung umschließen die Kunstharze wie Polyesterharz oder Polymethylmetacrylat (PMMA) alle Bestandteile und verbinden diese. Die Erfindung nutzt die weiteren Eigenschaften der Harze, das Licht selbst zu leiten und durch die Benetzung der Oberflächen der Mischungsbestandteile den Lichtein- bzw. Lichtaustritt zu verbessern.

Als lichtdurchlässige Füllstoffe sind viele durchsichtigen, bzw., durchscheinenden kristallinen Mineralien und Glas in Kornform oder Fasern einsetzbar. Der Einsatz von Aluminiumtriehydroxyd erhöht zusätzlich die Brandsicherheit der Masse. Eine gewisse Eintrübung dieser Füllstoffe, ist je nach den sonstigen Eigenschaften und der Lichtwellenlänge, nicht wesentlich negativ. Durch die vielfache Reflektion und Weiterleitung des Lichtes in die Masse wird der überwiegende Teil der Pigmente aktiviert und es entsteht eine hohe Leuchtdichte und lange Leuchtdauer, die wiederum nach Außen geleitet wird.

Die fluoreszierenden Pigmente sind in verschieden Eigenschaften im Handel erhältlich, z. B. unter dem Namen "Lumilux". Die Sorten unterscheiden sich insbesondere nach der Empfindlichkeit hinsichtlich spezieller Wellenlängen, z. B. speziell für UV- Licht und nach der Nachleuchtkraft. Je nach Anwendungsziel sind fast alle Sorten gut für die erfinderische Masse geeignet.

Aus der Masse geformte Körper sind bei Verschleiß oder nach Beschädigung weiter leuchtaktiv. Auch räumlich komplizierte Körper besitzen, je nach Lichteinfall, eine allseitige Leuchtkraft. Der Einsatz dieser Mischung ist deshalb sehr vielseitig möglich. Sehr gut geeignet ist die Mischung für dekorative Flächen, im Dunkelbereich zur Gefahrsignalisierung oder zur Informationsvermittlung. Dazu können entsprechend Gegenstände geformt, Platten aus der Masse aufgeklebt oder Symbole, Bilder usw. auf eine entsprechend vorbereitete Oberfläche gegossen werden.

Abwandlungen der Masse für den Einsatz auf Verkehrsflächen sind in dem Unteranspruch 5 und für Wandanordnungen im Unteranspruch 6 dargelegt. Die Unteransprüche 7 bis 10 geben die Ausbildung von Wegleitelementen an.

### [Beispiele]

Nachfolgend soll die Masse und daraus geformte Körper an vier Beispielen erläutert werden.

### Beispiel 1

Zur Fertigung von Treppenstufen wird eine Mischung aus:
- 57 Gewichtsteilen Granitsplitt, Körnung 2-4 mm
- 24 Gewichtsteilen Aluminiumtriehydroxyd (ATH)
- 4 Gewichtsteilen fluoreszierende Pigmente mit langer Nachleuchtkraft
mit 15 Gewichtsteilen Polymethylmetacrylat (PMMA) mit Härter/Beschleuniger vermischt und in eine Form gegossen, deren Breite der Höhe einer Setzstufe entspricht. Die Form hierfür ist durch die rechten Winkel sehr einfach zu fertigen. Aus dieser Platte wird ein Stück abgetrennt, deren Länge der gewünschten Setzstufe entspricht. Nunmehr wird dieser Abschnitt mit Heißluft oder Infrarotstrahlern erwärmt und gebogen. Die umgeformte Setzstufe wird an die entsprechende Öffnung der Form für die Trittstufe angesetzt. Anschließend erfolgt der Guss der Trittstufe aus einer üblichen Mischung aus Kunstharzbeton mit PMMA. Setz- und Trittstufe verbinden sich hierbei zu einem Körper. Die fertige Stufe besitzt eine nach außen geschwungene Auftrittsfläche. Die Setzstufe leuchtet nach dem Abdunkeln nach, so dass diese auch dann für Benutzer gut zu erkennen ist.

### Beispiel 2

Zur Herstellung eines Fußbodens wird auf dem vorbereiteten Unterbeton eine Kunstharzbetonmasse als Fußbodenschicht gegossen. Vor der Abbindung wird eine gewachste Form, die z. B. die Umrisse eines Symbols beinhaltet, in die Oberfläche gedrückt und die Masse abgezogen. Nach der Aushärtung wird die Form entfernt und die Vertiefung mit folgender Mischung ausgegossen:
- 60 Gewichtsteile Marmorsplitt, Körnung 2-5 mm
- 15 Gewichtsteile Aluminiumtriehydroxyd (ATH)
- 10 Gewichtsteile Glaskugeln, Durchmesser 0,1 bis 1 mm
- 3 Gewichtsteile bei UV-Licht fluoreszierende Pigmente
- 12 Gewichtsteile Polymethylmetacrylat (PMMA) mit Härter/ Beschleuniger

Zum Abschluss wird die gesamte Oberfläche überschliffen. Bei einer entsprechenden Beleuchtung mit UV -Strahlern wird auf dem Fußboden das leuchtende Symbol sichtbar. Diese Eigenschaft bleibt auch bei Verschleiß der Oberfläche, z. B. durch Tanzveranstaltungen erhalten.

### Beispiel 3

Zur Fertigung von Markierungsnägel oder Verkehrspfeile für befahrene Flächen wird eine Mischung aus 60 % Gewichtsanteilen Mikroglaskugeln, 36 % Gewichtsanteilen flüssigem Polymethylmetacrylat und ca. 4 % Gewichtsanteilen lumineszierende Pigmente in eine Form gegossen. Die ausgeformten Elemente werden in entsprechende Vertiefungen der Fahrbahnoberfläche eingeklebt. Durch den hohen Anteil an Glas sind die Elemente sehr verschleißfest, wobei der Glasanteil gleichzeitig der Weiterleitung des Lichtes im Element dient. Die Vorformung ermöglicht eine erhebliche Verkürzung der Absperrzeit für die Aufbringung.

Durch das Tageslicht werden die Pigmente "aufgeladen" und leuchten nachts ohne zusätzliche Anstrahlung.

### Beispiel 4

Zur Herstellung eines Gehäuses für eine Notbeleuchtung mit entsprechenden Markierungen oder Hinweisen für Gebäude wird eine Mischung aus 16 % Gewichtsanteilen Mikroglaskugeln und/oder Aluminiumtriehydroxyd, 50 % kleinstückigen transparenten Altkunstharzen, 30 % Gewichtsanteilen transparenten flüssigen Kunstharzen und ca. 4 % Gewichtsanteilen lumineszierenden Pigmenten verwendet. Das Gehäuse mit einer eingeformtem Markierung wird durch Gießen, Spritzgiesen oder ähnlichen bekannten Verfahren geformt.

Bei der Anwendung werden durch Tageslicht, eine Raumbeleuchtung, bzw. die Notbeleuchtung die Pigmente "aufgeladen" und leuchten auch bei Ausfall des Notstromnetzes. Ein Fluchtweg ist somit auch bei Rauchbildung und Stromausfall sicher erkennbar.

## Patentansprüche

1. Masse und daraus geformte Körper mit Oberflächeneffekt wie Wegleitelemente, bestehend aus Füllstoffen und Zuschlagstoffen zur Ausbildung besonderer Oberflächeneffekte, die mittels einem Bindemittel gebunden sind, **dadurch gekennzeichnet, dass** die Füllstoffe keine Feinstanteile, die Masse zusätzlich einen Anteil von über 1 % fluoreszierenden Pigmenten, sowie eine lichtdurchlässige Fraktion mit über 15 % Anteilen, und ein lichtdurchlässiges Bindemittel in üblichen Anteilen enthält.

2. Masse nach Anspruch 1, **dadurch gekennzeichnet, dass** die Pigmente lumineszierende Pigmente sind, die nach Lichteinwirkung nachleuchten (z. B. Handelsname "Lumilux").

3. Masse nach Anspruch 1 und 2, **dadurch gekennzeichnet, dass** diese aus einer mineralischen, körnigen Mischung über 2 mm Korngröße, einem lichtdurchlässigen Bindemittel, fluoreszierenden Pigmenten und einer Fraktion mit lichtdurchlässigen Eigenschaften besteht.

4. Masse nach Anspruch 1 bis 3, **dadurch gekennzeichnet, dass** diese aus einer mineralischen Mischung aus mehreren Fraktionen unterschiedlicher Körnung von Gesteinen über 2 mm, Kunstharz, fluoreszierenden Pigmenten und einer körnigen Fraktion mit lichtdurchlässigen Eigenschaften besteht.

5. Masse nach den Ansprüchen 1 bis 4, **dadurch gekennzeichnet, dass** diese aus 40 bis 70 % einer mineralischen Mischung aus mehreren Fraktionen unterschiedlicher Körnung von Gesteinen über mindestens 2 mm Korngröße, 10 bis 25 % Kunstharz, 1 bis 10 % fluoreszierenden Pigmenten und 15 bis 45 % einer körnigen Fraktion mit lichtdurchlässigen Eigenschaften besteht.

6. Masse nach Anspruch 1 bis 5, **dadurch gekennzeichnet, dass** die Füllstoffe im Körnungsbereich von 0 bis 3 mm durch fluoreszierende Pigmente und eine lichtdurchlässige Fraktion mit gleicher und größerer Körnung ersetzt sind.

7. Masse nach Anspruch 1 bis 6, **dadurch gekennzeichnet, dass** die körnige Fraktion mit lichtdurchlässigen Eigenschaften aus Aluminiumtriehydroxyd oder Glas mit einer Korngröße von 0,01 bis 10 mm besteht.

8. Masse nach Anspruch 1 bis 2, **dadurch gekennzeichnet, dass** diese aus einer Mischung aus zerkleinerten organischen Stoffen über 2 mm Teilchengröße, lichtdurchlässige Bindemittel, fluoreszierenden Pigmenten und einer Fraktion mit lichtdurchlässigen Eigenschaften besteht.

9. Masse nach Anspruch 1, 2 und 8, **dadurch gekennzeichnet, dass** die Füllstoffe aus zerkleinertem getrocknetem Holz und/oder Pflanzen über 2 mm Korngröße bestehen.

10. Masse nach Anspruch 1 und 2, **dadurch gekennzeichnet, dass** die Füllstoffe aus körnigem Altplaste bestehen.

11. Masse nach Anspruch 1 und 2, **dadurch gekennzeichnet, dass** diese aus 40 bis 89 Gewichtsanteilen transparenten Füllstoffen, 10 bis 60 % Gewichtsanteilen transparentem Kunstharz als Bindemittel und 1 bis 10 % Gewichtsanteilen lumineszierenden und oder fluoreszierenden Pigmenten besteht.

12. Masse nach Anspruch 1, 2 und 11, **dadurch gekennzeichnet, dass** die transparenten Füllstoffe Glasperlen und/oder Mikroglaskugeln und/oder kleinstückige transparente Kunstharze und/oder Aluminiumtriehydroxyd mit einer Größe von 0,01 bis 10 mm sind.

13. Masse nach Anspruch 1, 2 und 11, **dadurch gekennzeichnet, dass** die Masse vorzugsweise aus ca. 60 % Gewichtsanteilen Mikroglaskugeln, ca. 36 % Gewichtsanteilen Polymethylmetacrylat als Bindemittel und ca. 4 % Gewichtsanteilen lumineszierenden Pigmenten besteht.

14. Masse nach Anspruch 1, 2 und 11, **dadurch gekennzeichnet, dass** die Masse vorzugsweise aus ca. 16 % Gewichtsanteilen Mikroglaskugeln und/oder Aluminiumtriehydroxyd, ca. 50 % kleinstückigen transparenten Altkunstharzen, ca. 30 % Gewichtsanteilen transparente Kunstharze als Bindemittel und ca. 4 % Gewichtsanteilen lumineszierenden Pigmenten besteht.

15. Masse nach Anspruch 1 bis 14, **dadurch gekennzeichnet, dass** das Bindemittel ein Polymethylmetacrylat ist.

16. Verwendung der Masse nach den Ansprüchen 1 bis 15, **dadurch gekennzeichnet, dass** daraus Platten oder Körper für den Bau oder für Informationsflächen gegossen werden.

17. Verwendung der Masse nach den Ansprüchen 1 bis 16, **dadurch gekennzeichnet, dass** daraus Körper bzw. Bauelemente mit dekorativen oder informativen Oberflächen, wie Ornamente, Buchstaben, Logos oder Signalflächen geformt werden, indem Massen mit verschiedenen Pigmenten in speziell geformte Ausnehmungen auf der Oberfläche von Körpern, in der Art von Intarsien, gegossen werden.

18. Wegleitelemente für Verkehrsflächen wie Fahrbahnen, Hallenböden usw. in der Form von Pfeilen, Streifen, Markierungsnägeln u.a. **dadurch gekennzeichnet, dass** diese aus der Masse nach Anspruch 1, 2 und 11 bis 14 vorgefertigt und auf oder in die Verkehrsfläche eingeklebt werden.

19. Wegleitelemente für Verkehrsflächen wie Fahrbahnen, Hallenböden usw. in der Form von Pfeilen, Streifen, Markierungsnägeln u.a. **dadurch gekennzeichnet, dass** diese aus der Masse nach Anspruch 1, 2 und 11 bis 14 durch Gießen in entsprechende Vertiefungen der Verkehrsfläche gebildet sind.

20. Wegleitelemente in Verbindung mit Beleuchtungseinrichtungen, **dadurch gekennzeichnet**, das ein Teil oder das gesamte, die Lichtquelle umgebende Gehäuse, Reflektionsfläche, Lampenschirm u. ä. aus der Masse nach Anspruch 1 bis 15 besteht.
